# EUROPEAN PATENT SPECIFICATION

(11) **EP 3 193 105 B1**
(45) Date of publication and mention of the grant of the patent: **20.03.2024**
(21) Application number: 16204259.2
(22) Date of filing: 15.12.2016
(51) Int. Cl.: F25B 49/02, F25B 45/00, F25B 43/00, F25B 40/02, F25B 40/06, F25B 13/00

(54) **REFRIGERATION SYSTEM WITH SUPERHEATING, SUBCOOLING AND REFRIGERANT CHARGE LEVEL CONTROL**
KÜHLSYSTEM MIT ÜBERHITZUNGS-, UNTERKÜHLUNGS- UND KÜHLMITTELLADUNGSPEGELREGELUNG
SYSTÈME DE RÉFRIGÉRATION AVEC SURCHAUFFE, SOUS-REFROIDISSEMENT ET COMMANDE DE NIVEAU DE CHARGE DE FLUIDE FRIGORIGÈNE

(30) Priority: 13.01.2016 US 201614995119
(43) Date of publication of application: 19.07.2017
(73) Proprietor: Bergstrom, Inc., Rockford, IL 61125 (US)
(72) Inventor: CONNELL, Brett S., ROCKFORD, IL Illinois 61125 (US); SULLIVAN, Aaron D., ROCKFORD, IL Illinois 61125 (US); HERRMANN, Brett J., ROCKFORD, IL Illinois 61125 (US); ZEIGLER, Terry, ROCKFORD, IL Illinois 61125 (US)
(74) Representative: Eisenführ Speiser

(56) References cited:
- EP-A1- 1 477 748
- EP-A1- 1 700 725
- EP-A1- 1 970 651
- EP-A1- 2 894 420
- JP-A- H09 318 177
- JP-A- 2014 226 979
- US-A- 2 722 050
- US-A- 4 982 576
- US-A1- 2007 163 276
- US-B1- 6 571 566

## Description

### FIELD OF THE INVENTION

The present invention generally relates to refrigeration systems and control methods for such systems. More particularly, the present invention relates to refrigeration systems and methods that determine the refrigerant charge level and/or refills the refrigerant when the refrigerant charge level is below a predetermined level.

### BACKGROUND

The refrigerant level in a refrigeration system depends on a number of factors, including the configuration of the refrigeration system, the initial refrigerant level in the refrigeration system, any sub-cooling or super-heating that occurs during the operation of the refrigeration system, and the temperature and humidity of the environment where the refrigeration system is used. To ensure that a refrigeration system is operating efficiently and safely, it is essential to maintain the refrigerant in the refrigeration system at a proper level during operation.

Conventional refrigeration systems and methods focus on determination of whether the refrigerant in the systems is below or above an acceptable refrigerant charge level. Some of them focus on development of algorithms to more accurately determine the refrigerant charge level. Such conventional refrigeration systems and methods do not provide solutions to resolve the problems after it is determined that the refrigerant charge level is below an acceptable level.

US 2007/0163276 A1 discloses a method and apparatus for non-invasively determining a charge level of a refrigerant in a vapor-compression cycle system. The method and apparatus monitor the system while the system is operated to ascertain that the system is operating at approximately steady-state. The superheat and the subcooling of the system are then determined at the suction line and at the liquid line, respectively, and the refrigerant charge level is calculated based on the determined subcooling, the determined superheat, and rated operating conditions of the system, including rated refrigerant charge level, rated liquid line subcooling, and rated suction line superheat.

The information disclosed in this Background section is provided solely to provide a general background of the embodiments described herein and is not an acknowledgement or suggestion that this information forms part of the prior art already known to a person skilled in the art.

### SUMMARY

Various aspects of the present invention provide refrigeration systems and control methods that can not only determine the refrigerant charge level, but can also predict when the refrigerant charge level is getting low, and, in some embodiments, refill the refrigerant when the refrigerant charge level is below a proper refrigerant charge level.

In one embodiment, a refrigeration system includes a compressor, a condenser, an evaporator, an assembly, and refrigerant lines fluidly connecting the compressor, the condenser, the evaporator and the assembly to form a refrigerant circuit for circulating the refrigerant. The compressor compresses a refrigerant. The condenser, disposed downstream of the compressor, condenses the refrigerant. The evaporator, disposed downstream of the condenser, vaporizes the refrigerant. The assembly includes a receiver drier unit disposed between the condenser and the evaporator, or an accumulator unit disposed between the evaporator and the compressor, or both the receiver drier unit and the accumulator unit. The receiver drier unit includes a receiver drier and a first sensor. The receiver drier is configured to temporarily store the refrigerant or absorb moisture from the refrigerant or both. The first sensor is installed at the receiver drier to measure temperature and pressure of the refrigerant after it has passed through the condenser. The accumulator unit includes an accumulator and a second sensor. The accumulator is configured to restrict liquid refrigerant from entering the compressor. The second sensor is installed at the accumulator to measure temperature and pressure of the refrigerant after it has passed through the evaporator. The refrigeration system further includes a controller electrically connected to the assembly. The controller is configured to perform the following: determine a sub-cooling level based on the temperature and pressure measured by the first sensor, determine a super-heating level based on the temperature and pressure measured by the second sensor, and determine a refrigerant charge level based at least in part on the determined sub-cooling level or the determined super-heating level.

According to the invention, the assembly further includes an electronic valve fluidly connected to a refrigerant reservoir. The electronic valve may be installed at the receiver drier or at the accumulator or fluidly connected to the refrigerant circuit at a location other than the receiver drier unit or the accumulator unit. The electronic valve is selectively operated to allow flow of the refrigerant from the refrigerant reservoir to the refrigerant circuit. The flow of the refrigerant from the refrigerant reservoir to the refrigerant circuit is driven by pressure difference between the refrigerant reservoir and where the electronic valve is installed. As such, the refrigerant charge level is maintained above a predetermined refrigerant charge level.

In some embodiments, the refrigerant system further includes one or more of the following: a first air blower electrically coupled to the controller, positioned proximate the condenser and configured to blow ambient air or air from an air intake of the engine over the condenser; a metering device disposed upstream of the evaporator and configured for controlling flow of the refrigerant into the evaporator; and a flow control valve disposed upstream of the compressor and configured to selectively restrict or permit flow of the refrigerant to the compressor

In some embodiments, the sub-cooling level is determined using a look-up table in accordance with the temperature and pressure measured by the first sensor. The super-heating level is determined using a look-up table in accordance with the temperature and pressure measured by the second sensor. The refrigerant charge level is calculated based at least in part on the determined sub-cooling level or the determined super-heating level.

In some embodiments, the controller performs other additional or optional functions. In one case, the controller predicts whether and when a failure, in which the refrigerant charge level is below a predetermined refrigerant level, is likely to occur by extrapolating the determined refrigerant charge levels over time or by considering one or more of the following: a trend of the determined refrigerant charge levels over time, exterior temperature, interior temperature and humidity. In other embodiments, the controller predicts how long the refrigerant will last based on one or more of the determined sub-cooling levels over time and the determined super-heating levels over time. In yet other embodiments, the controller calculates a compression ratio of the compressor, determines whether a blockage occurs in the refrigerant circuit based on the calculated compression ratio, and determines a location of the blockage, if a blockage has occurred, based at least in part on the determined sub-cooling level and the determined super-heating level. In yet other embodiments, the controller is electrically connected to the compressor, counts clutch cycles of the compressor and predicts clutch life of the compressor based on one or more of the following: the clutch cycles, clutch temperature and current.

In some embodiments, the controller is electrically or wirelessly coupled to an electronic device and outputs one or more signals to the electronic device, such as determined sub-cooling, super-heating and/or refrigerant charge levels, warning signals and maintenance request.

The invention provides a method for controlling a refrigeration system. The first method includes: (a) obtaining a refrigerant sub-cooling level based on the temperature and pressure of the refrigerant measured by the first sensor, and a refrigerant super-heating level based on the temperature and pressure of the refrigerant measured by the second sensor; (b) calculating a refrigerant charge level based at least in part on the refrigerant sub-cooling level and the refrigerant super-heating level; (c) determining whether the refrigerant charge level is below a predetermined refrigerant charge level; and (d) selectively controlling the electronic valve, if it is determined that the refrigerant charge level is below the predetermined refrigerant charge level, to allow flow of the refrigerant from the refrigerant reservoir to the refrigerant circuit of the refrigeration system, thereby raising the refrigerant charge level to above the predetermined refrigerant charge level.

According to the invention, the first method further includes: installing a first sensor at the receiver drier to measure temperature and pressure of the refrigerant after it has passed through the condenser; installing a second sensor at the accumulator to measure temperature and pressure of the refrigerant after it has passed through the evaporator; and installing an electronic valve in the refrigerant circuit, wherein the electronic valve is fluidly connected to a refrigerant reservoir. In another case, the first method further includes one or more of the following: predicting whether and when a failure (e.g., the refrigerant charge level is below a predetermined refrigerant level) is likely to occur; predicting how long the refrigerant will last; determining where a blockage occurs in the refrigerant circuit and a location of the blockage; predicting clutch life of the compressor; and output a signal or signals to an electronic device.

Other embodiments provide a second method for controlling a refrigeration system. The second method includes: (a) installing a receiver drier unit in the refrigerant circuit between the condenser and the evaporator, wherein the receiver drier unit comprises a receiver drier and a first sensor installed at the receiver drier to measure temperature and pressure of the refrigerant after it has passed through the condenser; (b) installing an accumulator unit in the refrigerant circuit between the evaporator and the compressor, wherein the accumulator unit comprises an accumulator and a second sensor installed at the accumulator to measure temperature and pressure of the refrigerant after it has passed through the evaporator; (c) obtaining a refrigerant sub-cooling level based on the temperature and pressure of the refrigerant measured by the first sensor, and a refrigerant super-heating level based on the temperature and pressure of the refrigerant measured by the second sensor; (d) calculating a refrigerant charge level based at least in part on the refrigerant sub-cooling level and the refrigerant super-heating level; and (e) determining one or more of the following: whether the refrigerant sub-cooling level is within a predetermined refrigerant sub-cooling range; whether the refrigerant super-heating level is within a predetermined refrigerant super-heating range; and whether the refrigerant charge level is below a predetermined refrigerant charge level.

The refrigeration systems and methods of the present invention have other features and advantages that will be apparent from or are set forth in more detail in the accompanying drawings, which are incorporated herein, and the following Detailed Description, which together serve to explain certain principles of the present invention.

### BRIEF DESCRIPTION OF THE DRAWINGS

The accompanying drawings, which are incorporated into and constitute a part of this specification, illustrate one or more embodiments of the present application and, together with the detailed description, serve to explain the principles and implementations of the application.
FIG. 1 is a block diagram illustrating a refrigeration system in accordance with some embodiments of the present invention.
FIGS. 2A, 2B and 2C illustrate a receiver drier unit of a refrigeration system in accordance with some embodiments of the present invention.
FIGS. 2D, 2E and 2F are side, back and top views illustrating a receiver drier unit of a refrigeration system in accordance with some embodiments of the present invention.
FIGS. 3B, 3C and 3D are block diagrams illustrating alternative configurations of the refrigeration system in accordance with some embodiments of the present invention.
FIG. 4A is a flowchart illustrating a first exemplary method for controlling a refrigeration system in accordance with some embodiments of the present invention.
FIGS. 4B and 4C are flowcharts illustrating additional, optional or alternative processes of a method for controlling a refrigeration system in accordance with some embodiments of the present invention.
FIG. 5 is a flowchart illustrating a second exemplary method for controlling a refrigeration system in accordance with some embodiments of the present invention.

### DETAILED DESCRIPTION

Reference will now be made in detail to implementations of the present application as illustrated in the accompanying drawings. The same reference indicators will be used throughout the drawings and the following detailed description to refer to the same or like parts. Those of ordinary skill in the art will realize that the following detailed description of the present application is illustrative only and is not intended to be in any way limiting. Other embodiments of the present application will readily suggest themselves to such skilled persons having benefit of this disclosure.

In the interest of clarity, not all of the routine features of the implementations described herein are shown and described. It will, of course, be appreciated that in the development of any such actual implementations, numerous implementation-specific decisions must be made in order to achieve the developer's specific goals, such as compliance with application- and business-related constraints, and that these specific goals will vary from one implementation to another and from one developer to another. Moreover, it will be appreciated that such a development effort might be complex and time-consuming, but would nevertheless be a routine undertaking of engineering for those of ordinary skill in the art having the benefit of this disclosure.

Many modifications and variations of this disclosure can be made without departing from the scope of the appended claims, as will be apparent to those skilled in the art. The specific embodiments described herein are offered by way of example only, and the disclosure is to be limited only by the terms of the appended claims, along with the full scope of equivalents to which such claims are entitled.

Embodiments of the present invention are described in the context of refrigeration systems and methods for controlling the refrigeration systems. A refrigeration system of the present invention in general includes a compressor, a condenser, an evaporator and refrigerant lines fluidly connecting the compressor, condenser and evaporator to form a refrigerant circuit. According to the invention, the refrigeration system also includes a receiver drier unit and an accumulator unit disposed in the refrigerant circuit and integrated with a transducer to measure the temperature and pressure of the refrigerant. According to the invention, a controller is included in the refrigeration system and a novel method is used to (i) monitor the sub-cooling, super-heating and/or refrigerant charge levels, and (ii) may inform an operator whether and/or when a failure (e.g., the refrigerant charge level is below a predetermined refrigerant level) is likely to occur. According to the invention, the refrigeration system further includes an electronic valve fluidly connected to a refrigerant reservoir, which the controller (or another controller) selectively opens or closes so that the refrigerant in the refrigeration system is maintained above a predetermined refrigerant charge level.

The refrigeration systems of the present invention can be used in various applications such as in a vehicle for cooling a compartment of the vehicle. The vehicle includes, but is not limited to, cars, vans, trucks, buses, and trailers. In some cases, the refrigeration systems are used in conjunction with or integrated with existing A/C refrigeration systems. In some embodiments, the refrigeration systems share some common components, for instance, compressors, condensers or evaporators, with existing A/C refrigeration system(s). In some cases, the refrigeration systems are constructed by modifying existing A/C refrigeration systems, for instance, by installing a receiver drier unit and/or an accumulator unit of the present invention into the existing A/C refrigeration system(s).

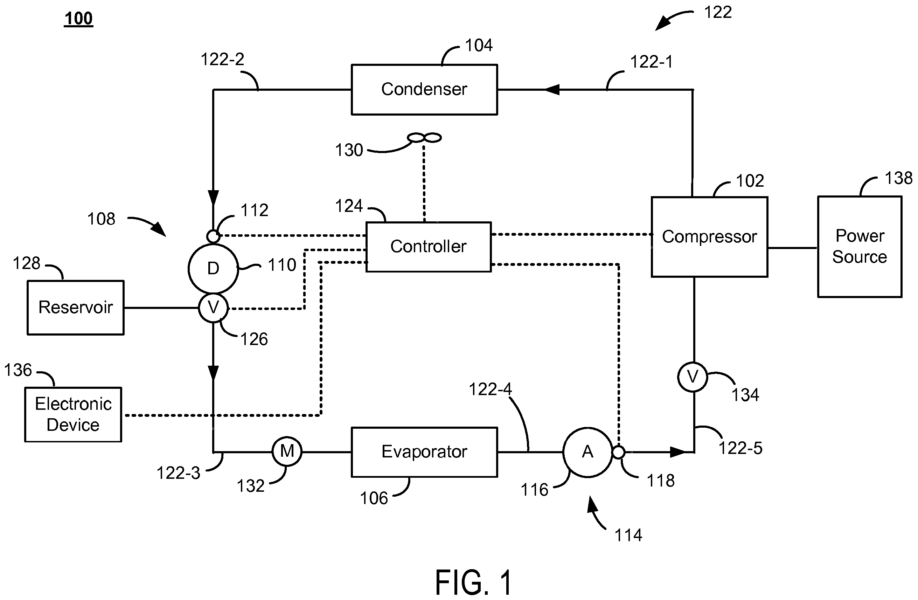

By way of illustration, FIG. 1 depicts a refrigeration system (100) including a compressor (102), a condenser (104), an evaporator (106), an assembly, and refrigerant lines fluidly connecting the compressor (102), condenser (104), evaporator (106) and assembly to form a refrigerant circuit for circulating the refrigerant. In some cases, the assembly includes both a receiver drier unit (108) and an accumulator unit (114). In some cases, the assembly includes only one of the receiver drier unit (108) and the accumulator unit (114). As an example, FIG. 1 illustrates the assembly including both the receiver drier unit (108) and an accumulator unit (114). In the illustrated embodiment, the condenser (104) is disposed downstream of the compressor (102) and fluidly connected to the compressor (102) by a refrigerant line (e.g., 122-1). The receiver drier unit (108) is disposed downstream of the condenser (104) and fluidly connected to the condenser (104) by a refrigerant line (e.g., 122-2). In some cases, the receiver drier unit (108) includes a receiver drier (110) and a first sensor (112). The evaporator (106) is disposed downstream of the receiver drier unit (108) and fluidly connected to the receiver drier unit (108) by a refrigerant line (e.g., 122-3). The accumulator unit (114) is disposed downstream of the evaporator (106) and fluidly connected to the evaporator (106) by a refrigerant line (e.g., 122-4) and to the compressor (102) by a refrigerant line (e.g., 122-5), thus forming a refrigerant circuit for circulating the refrigerant. In some cases, the accumulator unit (114) includes an accumulator (116) and a second sensor (118).

The first and second sensors (112, 118) can be any type of sensors suitable to measure temperature and pressure of the refrigerant, including but not limited to combined pressure and temperature transducers. In some cases, the first sensor (112) includes a first temperature sensor and a first pressure sensor; the second sensor (118) includes a second temperature sensor and a second pressure sensor. The first sensor (112) is disposed on the high pressure side of the refrigerant circuit, and preferably installed at the receiver drier (110) such as at the inlet, outlet, interior or other suitable location of the receiver drier (110). The second sensor (118) is disposed on the low pressure side of the refrigerant circuit, and preferably installed at the accumulator (116) such as at the inlet, outlet, interior or other suitable location of the accumulator (116). Having the first sensor (112) installed at the receiver drier (110) and/or the second sensor (118) at the accumulator (116) provides several advantages, including packaging and installation convenience, original equipment time saving, and easier leakage testing.

During operation of the refrigeration system, the compressor (102) compresses a refrigerant into a compressed refrigerant. The compressor (102) can be any type of compressor including but not limited to a reciprocating compressor or rotary compressor. The compressor (102) is driven by a power source (138) such as a solar cell, an electrical battery, an alternator, or may be belt driven from an internal combustion engine if the refrigeration system is used in a vehicle. The condenser (104) condenses the refrigerant that has been compressed by the compressor (102). The receiver drier (110) of the receiver drier unit (108) temporarily stores the refrigerant and/or absorbs moisture, debris or other undesirable substances from the refrigerant that has been condensed by the condenser (104). The first sensor (112) measures temperature and pressure of the refrigerant that has been condensed by the condenser (104). The evaporator (106) vaporizes or evaporates the refrigerant that has been condensed by the condenser (104), providing cooling for desired use. The accumulator (116) restricts liquid refrigerant from entering the compressor (102), for example by temporarily storing excess liquid refrigerant at the accumulator (116), to prevent damage to the compressor (102). The second sensor (118) measures temperature and pressure of the refrigerant that has been vaporized/evaporated by the evaporator (106). It should be noted that depending on the operation and performance of the refrigeration system, the condensed refrigerant at the receiver drier (110) and the vaporized/evaporated refrigerant at the accumulator (116) can be in the form of a liquid, a vapor, or a mixture of liquid and vapor.

In many embodiments, the refrigeration system (100) also includes a controller (124) electrically coupled to one or more components of the refrigeration system and configured to monitor and control the amount of the refrigerant entering into the evaporator (106), the amount of the refrigerant entering the compressor (102), the refrigerant level in the refrigeration system, and/or other operations. For instance, in the illustrated embodiment, the controller (124) is electrically connected to the assembly, in particular, connected to the first sensor (112) of the receiver drier unit (108) and the second sensor (118) of the accumulator unit (114). The controller (124) determines a sub-cooling level based on the temperature and pressure measured by the first sensor (112), a super-heating level based on the temperature and pressure measured by the second sensor (118), and/or a refrigerant charge level based at least in part on the determined sub-cooling level or the determined super-heating level. In some cases, the controller (124) is mounted on or integrated with the receiver drier (110) or the accumulator (116).

As used herein, "sub-cooling" refers to a condition where the temperature of a liquid refrigerant is lower than the saturation temperature required to keep the liquid refrigerant from changing into a gas phase, or a liquid existing at a temperature below its normal saturation temperature. As used herein, "sub-cooling level" refers to an amount of sub-cooling at a given condition (e.g., at a particular pressure), and in some cases, it is the difference between the saturation temperature at the given condition and the actual liquid refrigerant temperature measured by the first sensor. In some embodiments, sub-cooling level is determined by converting the pressure measured by the first sensor to a temperature using a pressure-temperature (PT) chart or table and then subtracting that temperature from the temperature measured by the first sensor. In some embodiments, the sub-cooling level is determined using a look-up table in accordance with the temperature and pressure measured by the first sensor. In some cases, the look-up table is stored in a memory associated with the controller.

As used herein, "super-heating" refers to a condition where the temperature of a vapor refrigerant is higher than the saturation temperature at a particular pressure, or heating a liquid under pressure above its boiling point without vaporization. As used herein, "super-heating level" refers to an amount of super-heating at a given condition, and in some cases, it is the difference between the saturation temperature at the given condition and the actual vapor refrigerant temperature measured by the second sensor. In some embodiments, super-heating level is determined by converting the pressure measured by the second sensor to a temperature using a PT chart or table and then subtracting that temperature from the temperature measured by the second sensor. In some embodiments, the super-heating level is determined using a look-up table in accordance with the temperature and pressure measured by the second sensor. In some cases, the look-up table is stored in a memory associated with the controller.

As used herein, "refrigerant charge level" refers to an amount of refrigerant contained in the refrigeration system, and "predetermined refrigerant charge level" refers to a predetermined amount of refrigerant for the refrigeration system to operate efficiently and safely. In most cases, the predetermined refrigerant charge level depends on the design and configuration of the refrigeration system and can be determined prior to the use of the refrigeration system. Maintaining the refrigerant at or above the predetermined refrigerant charge level during the operation of refrigeration system is essential for the refrigeration system to operate efficiently and safely.

According to the invention, the refrigeration system further includes an electronic valve (126) to inject refrigerant from a refrigerant reservoir (128) into the refrigeration system when the refrigerant charge level is below a predetermined refrigerant charge level. According to the invention, control of the electronic valve is controlled by the controller. As such, the refrigeration system can continue functioning properly for some additional period of time, allowing an operator to schedule a maintenance appointment or take other appropriate actions. The electronic valve (126) can be integrated with the assembly, e.g., installed at the receiver drier (110) or at the accumulator (116), or fluidly connected to the refrigerant circuit at a location other than the receiver drier unit (108) or the accumulator unit (114). As an example, FIG. 1 illustrates the electronic valve (126) installed at the receiver drier (110).

The electronic valve (126) is selectively operated to allow flow of the refrigerant from the refrigerant reservoir (128) to the refrigerant circuit. Operation of the electronic valve (126) is automatic. According to the invention, the controller (124) is electrically connected to the electronic valve (126) and controls the electronic valve (126) to be selectively opened when the refrigerant charge level is low (e.g., below a predetermined refrigerant charge level) or closed when the refrigerant charge level is normal (e.g., above the predetermined refrigerant charge level). In an embodiment where the electronic valve is installed at the receiver drier, when the electronic valve is opened, the refrigerant flows from the refrigerant reservoir to the refrigerant circuit, driven by the pressure difference between the refrigerant reservoir and the receiver drier. In an embodiment where the electronic valve is installed at the accumulator, when the electronic valve is opened, the refrigerant flows from the refrigerant reservoir to the refrigerant circuit, driven by the pressure difference between the refrigerant reservoir and the accumulator. In an embodiment where the electronic valve is directly connected to the refrigerant circuit, when the electronic valve is opened, the refrigerant flows from the refrigerant reservoir to the refrigerant circuit, driven by the pressure difference between the refrigerant reservoir and the refrigerant circuit at the location where the electronic valve is fluidly connected. As such, the refrigerant charge level in the refrigeration system is maintained above a predetermined refrigerant charge level, allowing the refrigeration system to operate safely and efficiently and allowing time for an operator or others to schedule a maintenance appointment or take other proper actions.

In some embodiments, the controller (124) performs additional or optional functions. For instance, in an embodiment, the controller (124) is configured to predict how long the refrigerant will last based on the sub-cooling level over time, the super-heating level over time, the refrigerant charge level, and/or other factors such as temperature and humidity inside and outside of the place where the refrigeration system is used (e.g., a vehicle). Sub-cooling and super-heating levels depend on ambient conditions and thermal load on the refrigeration system, and are unique for each set of given conditions including ambient conditions and thermal load on the refrigeration system. By monitoring the sub-cooling level and/or super-heating over time, the system is able to predict a refrigerant leakage rate severity (if any) and how long the system can run before service is required.

In another embodiment, the controller (124) is configured to predict whether a failure, in which the refrigerant charge level is below a predetermined refrigerant charge level, is likely to occur. Generally, a refrigeration system has an initial charge level, and learns how the refrigeration system operates and then is able to tell whether a charge level is low over time. In some cases, the controller uses the obtained super-heating level and sub-cooling in conjunction with power and ambient conditions to determine whether the refrigeration system is performing correctly. Then based on the normal operation "learned" over time, the controller determines whether the refrigerant charge level is low, e.g., below a predetermined refrigerant charge level. In some cases, the controller examines the trend of the refrigerant charge level over time and extrapolates the refrigerant charge level to predict how long the refrigerant will last and/or when the refrigerant charge level is likely to be below the predetermined refrigerant level.

In still another embodiment, the controller (124) is configured to calculate a compression ratio of the compressor (102). If the calculated compression ratio exceeds a specific compression ratio for a given condition, the controller (124) determines that a blockage occurs in the refrigerant circuit. The controller (124) then examines the sub-cooling level, the super-heating level and/or other factors to determine the location of the blockage. For instance, abnormal sub-cooling level indicates a blockage in the condenser (104) and abnormal super-cooling indicates a blockage in the evaporator (106).

In a further embodiment, the controller (124) is electrically connected to the compressor (102). The controller (124) is configured to count clutch cycles of the compressor (102) and predict clutch life of the compressor (102) based on the clutch cycles, clutch temperature, current and/or other factors.

In some embodiments, the controller (124) is electrically or wirelessly coupled to an electronic device (136) including but not limited to a display, a receiver, a smartphone or a computer. The electronic device (136) can be located in the same place as the refrigeration system. For instance, the refrigeration system is installed in a vehicle and the electronic device (136) is a display on the dashboard of the vehicle. The electronic device (136) can also be located remotely from the refrigeration system. For instance, the refrigeration system is installed in a vehicle whereas the electronic device (136) is a device not directly associated with the vehicle such as a personal smartphone or a computer at a dealer.

The controller (124) outputs one or more signals to the electronic device (136). The signals can be audio such as a beep or visual such a text or graphic displayed on a screen. The signals include but are not limited to data (e.g., the cooling level, the super-heating level and the refrigerant charge level), warning signals (e.g., the refrigerant charge level is below a predetermined refrigerant charge level), maintenance request or the like.

In some cases, the controller (124) outputs a warning signal if one or more of the following occur: when one or more of the following occurs: the sub-cooling level is outside of a predetermined sub-cooling range, the super-heating level is outside of a predetermined super-heating range, the refrigerant charge level is below a predetermined refrigerant charge level, the compression ratio is above a specific level for a given condition, a blockage has occurred, or a cooling efficiency of the refrigeration system is below a predetermined cooling efficiency. In some cases, the controller (124) outputs a warning signal if one or more of the following occur: the determined sub-cooling level is outside of a predetermined sub-cooling range for a first predetermined period of time, the determined super-heating level is outside of a predetermined super-heating range for a second predetermined period of time, the refrigerant charge level is below a predetermined refrigerant charge level for a third predetermined period of time. It should be noted that the predetermined sub-cooling range, the predetermined super-heating range, the predetermined refrigerant charge level, the specific level for the compression level and other parameters depend on refrigeration system's configuration and design, and can be determined prior to the use of the refrigeration system.

In some embodiments, the refrigeration system includes one or more additional or optional components such as air blowers, metering devices, flow control valves, or the like. By way of illustration, FIG. 1 illustrates the refrigeration system including a first air blower (130) electrically coupled to the controller (124) and positioned proximate the condenser (104). The first air blower (130) is configured to blow ambient air or air from an air intake of the engine over the condenser (104). The amount of airflow over the condenser (104) affects the temperature and pressure of the refrigerant at the high pressure side of the refrigerant circuit and hence the efficiency of the refrigeration system. Accordingly, in some cases, to enhance the efficiency of the refrigeration system, the controller (124) controls a speed of the first air blower (130) based at least in part on the temperature measured by the first sensor (112), the pressure measured by the first sensor (112), the temperature measured by the second sensor (118), and/or the pressure measured by the second sensor (118).

The refrigeration system as illustrated in FIG. 1 also includes a metering device (132) disposed upstream of the evaporator (106) and configured for controlling flow of the refrigerant into the evaporator (106). In some cases, the metering device (132) is a thermal expansion valve or a capillary tube. In some cases, the refrigeration system further includes a flow control valve (134) disposed upstream of the compressor (102) and configured to selectively restrict or permit flow of the refrigerant to the compressor (102).

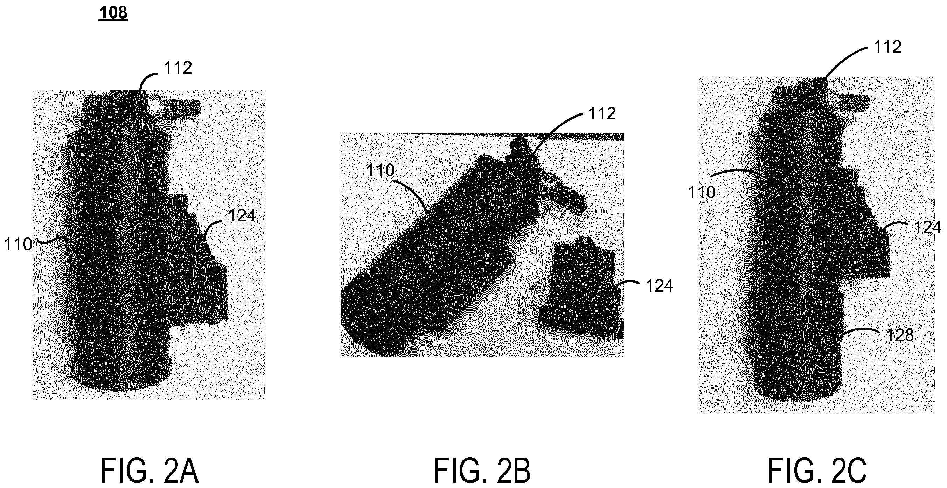

FIGS. 2A-2F depict exemplary receiver drier units of the refrigeration system in accordance with some embodiments of the present invention. FIG. 2A shows a receiver drier unit (108) including a receiver drier (110) and a first sensor (112) and a controller (124) installed at the receiver drier (110). FIG. 2B shows a receiver drier unit (108) including a receiver drier (110) and a controller (124) to be installed at the receiver drier (110). FIG. 2C shows a receiver drier unit (108) including a receiver drier (110), and a first sensor (112), a controller (124) and a refrigerant reservoir (128) that are installed at or mounted on the receiver drier (110). An electronic valve (126) is installed inside for injecting the refrigerant from the refrigerant reservoir (128) to the receiver drier (110) when the refrigerant level in the system is low.

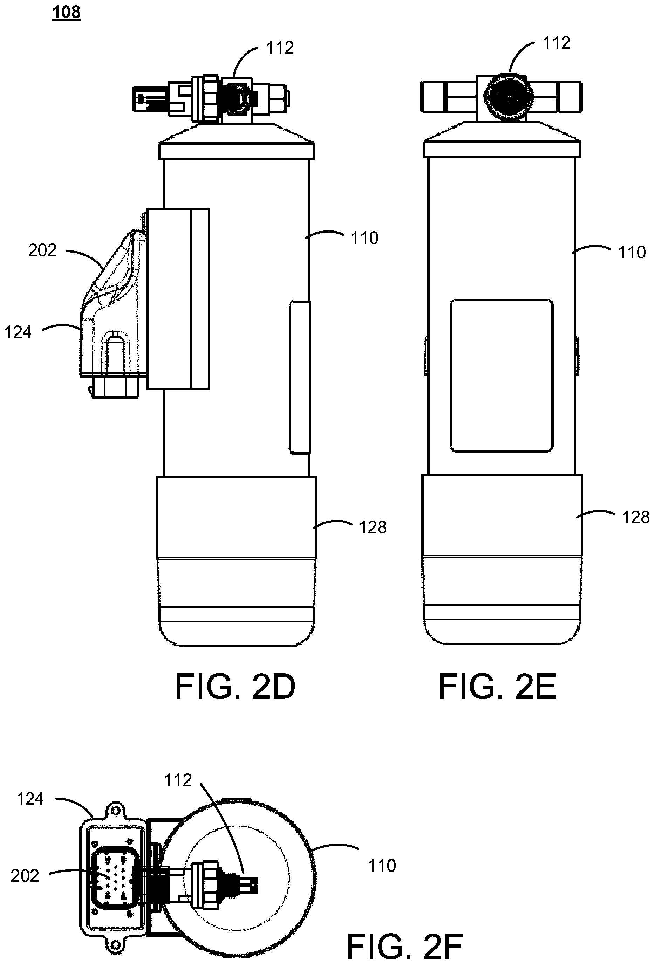

FIGS. 2D, 2E and 2F are side, back and top views illustrating a receiver drier unit of a refrigeration system in accordance with some embodiments of the present invention. By way of illustration, FIGS. 2D, 2E and 2F show a receiver drier unit (108) having a receiver drier (110), a first sensor (112) installed on the top of the receiver drier, a controller (124) mounted on a side wall of the receiver drier and a refrigerant reservoir (128) installed at the bottom or the bottom portion of the receiver drier. In the illustrated embodiment, the cross-section of the refrigerant reservoir (128) is similar to that of the receiver drier (e.g., circular), such that the bottom or the bottom portion of the receiver drier can be placed on or received by the refrigerant reservoir, making the integration of the receiver drier with the refrigerant reservoir easier and robust.

In some embodiments, the control (124) includes a control board (202), such as a screen, a key board or a user interface. The control board can be used for displaying data (e.g., the cooling level, the super-heating level and the refrigerant charge level), for communication (e.g., sending warning signals, maintenance request), for setting operation criteria (e.g., predetermined refrigerant charge level) or the like.

Similarly, an accumulator unit (114) can be configured to include an accumulator (116) and one or more of the following: a second sensor (118), a controller (124), an electronic valve (126), and a refrigerant reservoir (128). It should be noted that in an embodiment with both a receiver drier unit (108) and an accumulator unit (114), it is unnecessary to install a controller (124) at each of the receiver drier (110) and the accumulator (116). Likewise, it is unnecessary to install an electronic valve (126) or a refrigerant reservoir (128) at each of the receiver drier (110) and the accumulator (116).

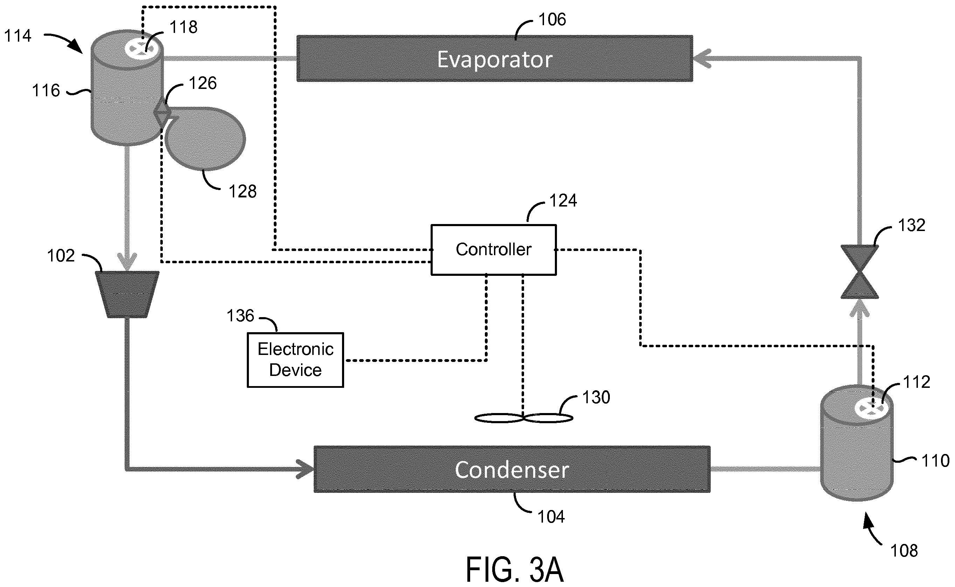

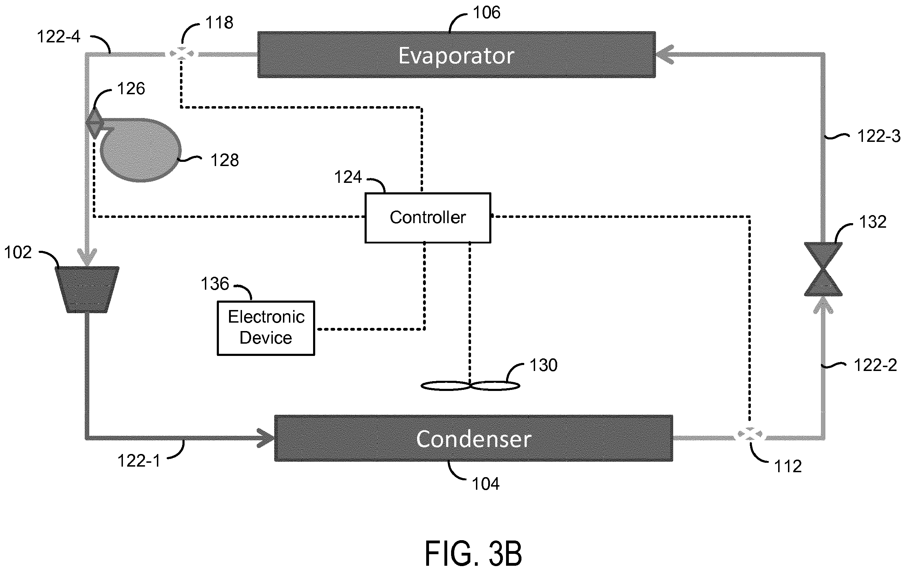

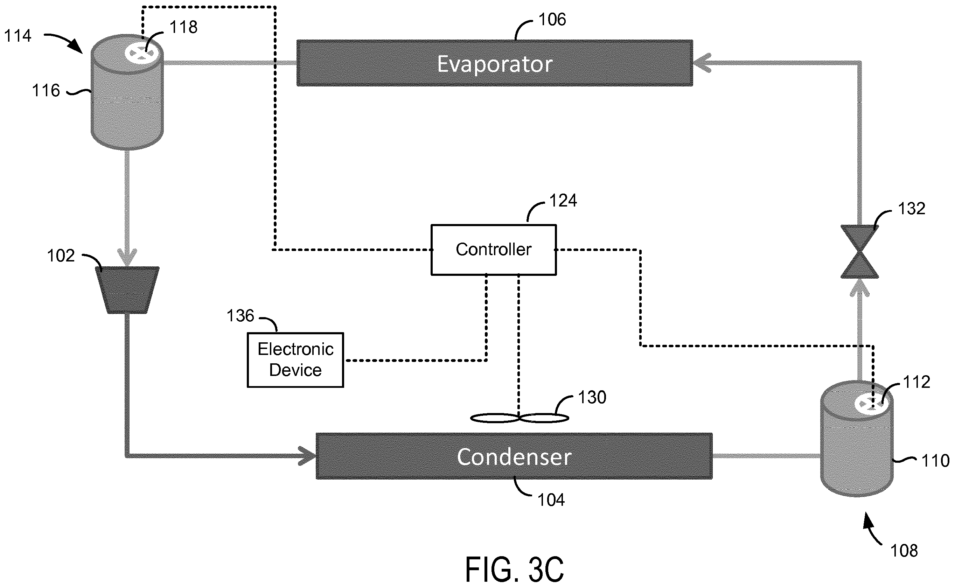

The refrigeration system of the present invention illustrated in FIG. 1 is exemplary and non-exclusive, and can be altered or modified. For instance, FIG. 3A illustrates an alternative configuration of the refrigeration system in which the electronic valve (126) is installed at the accumulator (116) instead of at the receiver drier (110) as illustrated in FIG. 1. In such embodiments, the refrigerant flows from the refrigerant reservoir (128) through the electronic valve (126) to the accumulator (116) when the refrigerant charge level in the refrigeration system is low. FIG. 3B illustrates another alternative configuration of the refrigeration system in which the electronic valve (126) is fluidly connected to the refrigerant circuit between the evaporator (106) and the compressor (102). In such embodiments, the refrigerant flows from the refrigerant reservoir (128) through the electronic valve (126) to the refrigerant circuit at the refrigerant line (122-4) when the refrigerant charge level in the refrigeration system is low. FIG. 3C illustrates yet another alternative configuration of the refrigeration system which does not include an electronic valve (126) for injecting refrigerant into the refrigeration system. In such embodiments, the refrigeration system outputs a signal to inform an operator or others when the refrigerant charge level in the refrigeration system is low. The operator or others can then manually replenish the refrigerant, schedule a maintenance appointment or take other proper actions.

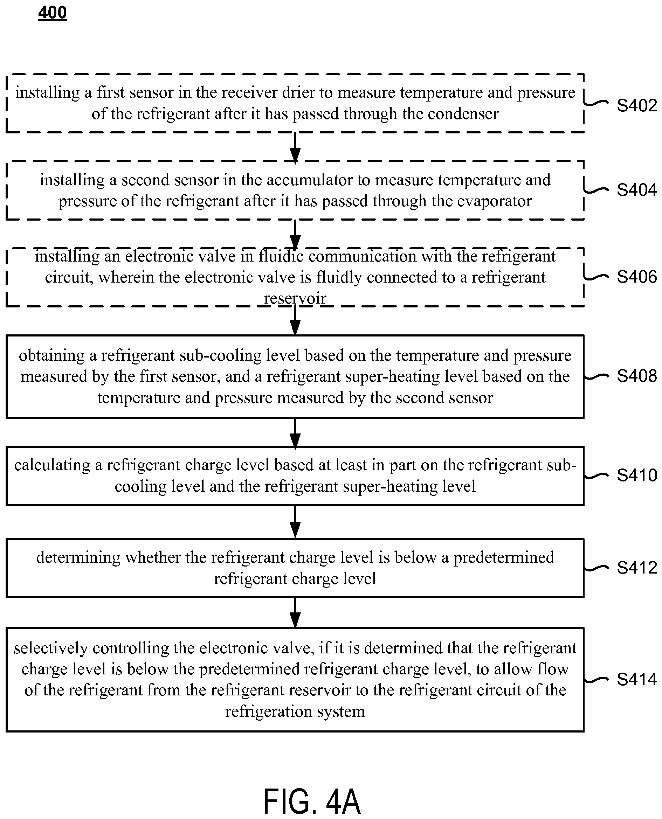

Turning now to FIG. 4A, there depicts a first method for controlling refrigeration systems in accordance with some embodiments of the present invention. For illustration purpose, the first method is described in the context of a refrigeration system that includes a first sensor (112) for measuring temperature and pressure of a refrigerant after it has passed through a condenser (104), a second sensor (118) for measuring temperature and pressure of the refrigerant after it has passed through an evaporator (106), and an electronic valve (126) fluidly connected to a refrigerant circuit of the refrigeration system and a refrigerant reservoir (128). According to the invention, the refrigeration system includes a condenser (104) disposed downstream of the compressor (102), a receiver drier (110) disposed downstream of the condenser (104), an evaporator (106) disposed downstream of the receiver drier (110), an accumulator (116) disposed downstream of the evaporator (106), and refrigerant lines fluidly connecting the compressor (102), the condenser (104), the receiver drier (110), the evaporator (106) and the accumulator (116) in series to form a refrigerant circuit to circulate the refrigerant.

In some embodiments, the first method is governed by instructions that are stored in and executed by a controller such as the controller illustrated in FIGS. 1-3C. In some embodiments, the first method is governed by instructions that are stored in and executed by an electronic device other than the controller illustrated in FIGS. 1-3C.

According to the invention, the first method includes: obtaining a refrigerant sub-cooling level based on the temperature and pressure of the refrigerant measured by the first sensor (112), and a refrigerant super-heating level based on the temperature and pressure of the refrigerant measured by the second sensor (S408); calculating a refrigerant charge level based at least in part on the refrigerant sub-cooling level and the refrigerant super-heating level (S410); determining whether the refrigerant charge level is below a predetermined refrigerant charge level (S412); and selectively controlling the electronic valve, if it is determined that the refrigerant charge level is below the predetermined refrigerant charge level, to allow flow of the refrigerant from the refrigerant reservoir to the refrigerant circuit of the refrigeration system, thereby raising the refrigerant charge level to above the predetermined refrigerant charge level (S414).

In some embodiments, the sub-cooling level is determined using a look-up table in accordance with the temperature and pressure measured by the first sensor. The super-heating level is determined using a look-up table in accordance with the temperature and pressure measured by the second sensor. The look-up tables for determining the sub-cooling level and the super-heating level can be separate tables or combined into one table. In some cases, the look-up table(s) is stored in a memory associated with the controller.

According to the invention, prior to obtaining the refrigerant sub-cooling and/or super-heating levels (S408), the first method further includes: installing a first sensor at the receiver drier to measure temperature and pressure of the refrigerant after it has passed through the condenser (S402); installing a second sensor at the accumulator to measure temperature and pressure of the refrigerant after it has passed through the evaporator (S404); and installing an electronic valve in the refrigerant circuit, wherein the electronic valve is fluidly connected to a refrigerant reservoir (S406).

It should be noted that the processes illustrated in FIG. 4A are not necessarily fixed in a particular order. For instance, installing a first sensor at the receiver drier (S402) can be performed after a second sensor is installed at the accumulator (S404) and before an electronic valve is installed in the refrigerant circuit (S406), or after both the second sensor and the electronic valve are installed.

Also, it should be noted that some processes illustrated in FIG. 4A are additional or optional processes. For instance, in some cases where the refrigeration system is integrated with an existing A/C system or modified from the existing system with temperature sensors already installed in the low and/or high pressure sides of the refrigerant circuit, installing a first sensor at the receiver drier (S402) or installing a second sensor at the accumulator (S404) or both are unnecessary.

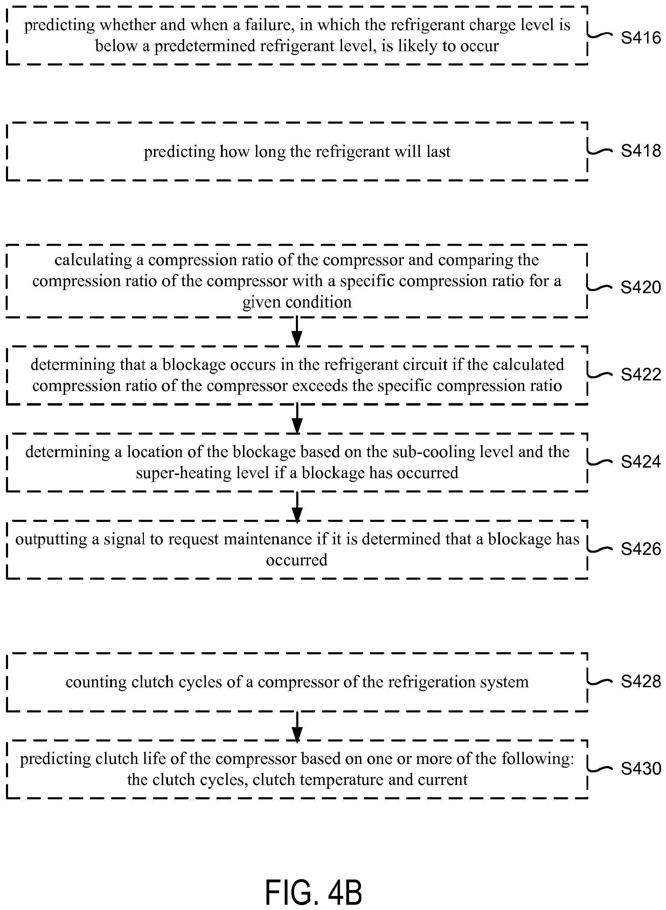

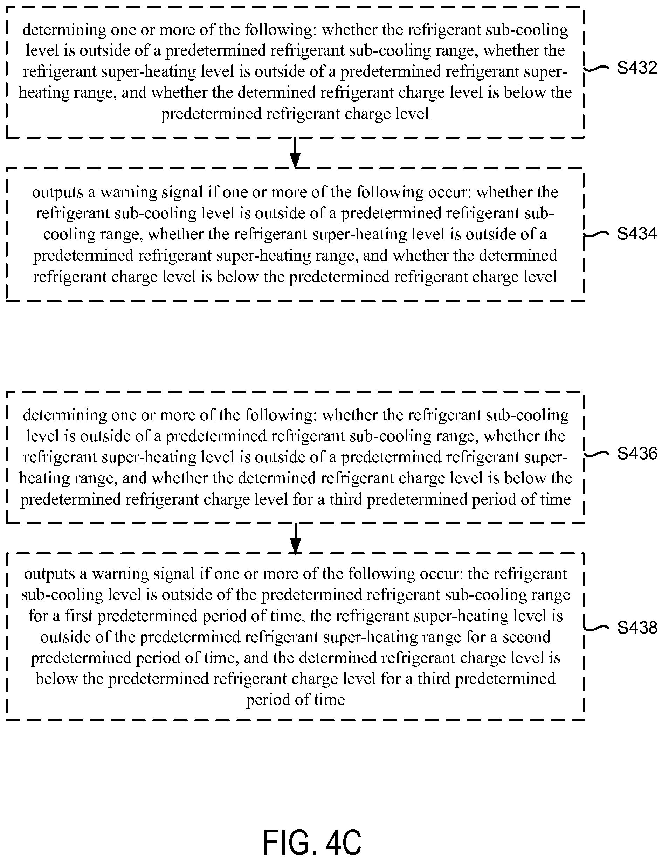

Further, the first method illustrated in FIG. 4A can include other alternative, additional or optional processes. As an example, FIGS. 4B and 4C illustrate some exemplary alternative, additional or optional processes. For instance, in some embodiments, subsequent to calculating the refrigerant charge level (S410), the first method includes one or more of the following processes: predicting whether and when a failure, in which the refrigerant charge level is below a predetermined refrigerant level, is likely to occur based on one or more of the following: a trend of the determined refrigerant charge levels over time, exterior temperature, interior temperature and humidity (S416); and predicting how long the refrigerant will last based on the sub-cooling level over time, the super-heating level over time, the refrigerant charge level, and/or other factors such as temperature and humidity inside and outside of the place where the refrigeration system is used (e.g., a vehicle) (S418).

Generally, a refrigeration system has an initial charge level. The controller learns how the refrigeration system operates and determines whether a charge level is low over time. In some cases, the controller uses the obtained super-heating level and sub-cooling in conjunction with power and ambient conditions to determine whether the refrigeration system is performing correctly. Then based on the normal operation "learned" over time, the controller determines whether the refrigerant charge level is low, e.g., below a predetermined refrigerant charge level. In some cases, the controller examines the trend of the refrigerant charge level over time and extrapolates the refrigerant charge level to predict how long the refrigerant will last and/or when the refrigerant charge level is likely to be below the predetermined refrigerant level.

In some embodiments, the first method includes one of more of the following additional processes: calculating a compression ratio of the compressor (102) and comparing the compression ratio of the compressor (102) with a specific compression ratio for a given condition (S420); determining that a blockage occurs in the refrigerant circuit if the calculated compression ratio of the compressor (102) exceeds the specific compression ratio (S422); determining a location of the blockage based on the sub-cooling level and the super-heating level if a blockage has occurred (S424); and outputting a signal to request maintenance if it is determined that a blockage has occurred (S426).

In some embodiments, the compression ratio is the ratio of the absolute discharge pressure of the compressor to the absolute suction pressure of the compressor, i.e., a value of the absolute discharge pressure of the compressor divided by the absolute suction pressure of the compressor. If it is determined that a blockage occurs in the refrigerant circuit, abnormal sub-cooling level indicates a blockage in the condenser and abnormal super-cooling indicates a blockage in the evaporator.

In some embodiments, the first method includes one of more of the following additional processes: counting clutch cycles of a compressor of the refrigeration system (S428); and predicting clutch life of the compressor based on one or more of the following: the clutch cycles, clutch temperature and current (S430).

In some embodiments, the first method includes one of more of the following additional processes: determining one or more of the following: whether the refrigerant sub-cooling level is outside of a predetermined refrigerant sub-cooling range, and whether the refrigerant super-heating level is outside of a predetermined refrigerant super-heating range (S432); and outputs a warning signal if one or more of the following occur: the determined sub-cooling level is outside of the predetermined sub-cooling range, the determined super-heating level is outside of the predetermined super-heating range, the determined refrigerant charge level is below the predetermined refrigerant charge level (S434). Alternatively, in some embodiments, the first method includes one of more of the following additional processes: determining one or more of the following: whether the refrigerant sub-cooling level is outside of a predetermined refrigerant sub-cooling range, whether the refrigerant super-heating level is outside of a predetermined refrigerant super-heating range, and whether the determined refrigerant charge level is below the predetermined refrigerant charge level for a third predetermined period of time (S436); and outputs a warning signal if one or more of the following occur: the refrigerant sub-cooling level is outside of the predetermined refrigerant sub-cooling range for a first predetermined period of time, the refrigerant super-heating level is outside of the predetermined refrigerant super-heating range for a second predetermined period of time, and the determined refrigerant charge level is below the predetermined refrigerant charge level for a third predetermined period of time (S438).

It should be noted that the first method can include any number of the alternative, additional or optional processes such as those illustrated in FIGS. 4B and 4C, in any combination and in any appropriate orders.

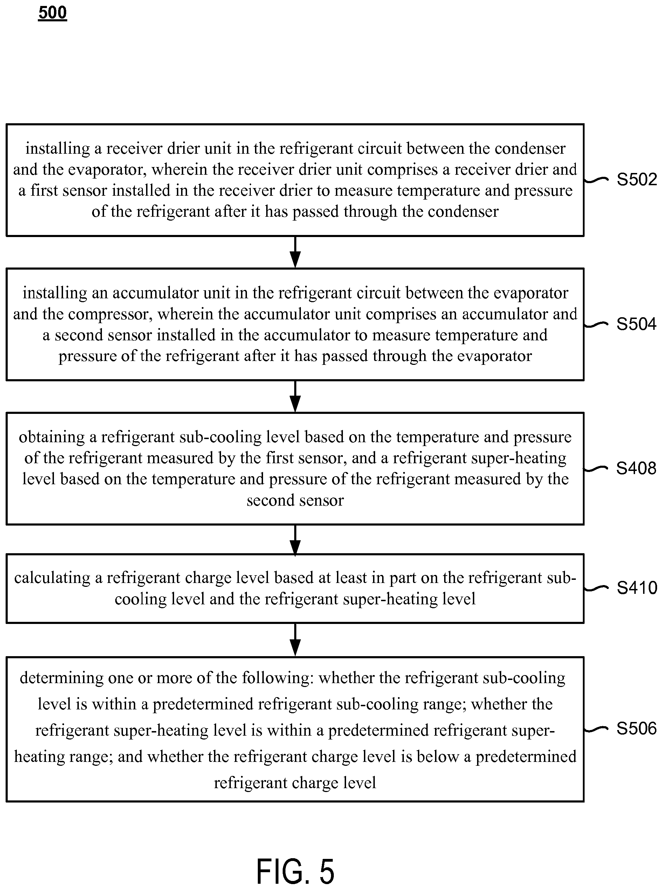

Referring now to FIG. 5, there depicts a second method for controlling refrigeration systems in accordance with some embodiments of the present invention. For illustration purpose, the second method are described in the context of a refrigeration system that includes a condenser disposed downstream of the compressor, an evaporator disposed downstream of the condenser, and refrigerant lines fluidly connecting the compressor, the condenser and the evaporator in series to form a refrigerant circuit to circulate the refrigerant.

Like the first method, in some embodiments, the second method is governed by instructions that are stored in and executed by a controller such as the controller illustrated in FIGS. 1-3C. In some embodiments, the second method is governed by instructions that are stored in and executed by an electronic device other than the controller illustrated in FIGS. 1-3C.

In some embodiments, the second method includes: installing a receiver drier unit in the refrigerant circuit between the condenser and the evaporator, wherein the receiver drier unit comprises a receiver drier and a first sensor installed at the receiver drier to measure temperature and pressure of the refrigerant after it has passed through the condenser (S502); installing an accumulator unit in the refrigerant circuit between the evaporator and the compressor, wherein the accumulator unit comprises an accumulator and a second sensor installed at the accumulator to measure temperature and pressure of the refrigerant after it has passed through the evaporator (S504); obtaining a refrigerant sub-cooling level based on the temperature and pressure of the refrigerant measured by the first sensor, and a refrigerant super-heating level based on the temperature and pressure of the refrigerant measured by the second sensor (S408); calculating a refrigerant charge level based at least in part on the refrigerant sub-cooling level and the refrigerant super-heating level (S410); and determining one or more of the following: whether the refrigerant sub-cooling level is within a predetermined refrigerant sub-cooling range; whether the refrigerant super-heating level is within a predetermined refrigerant super-heating range; and whether the refrigerant charge level is below a predetermined refrigerant charge level (S506).

Like the first method, the processes illustrated in FIG. 5 are not necessarily fixed in a particular order. For instance, installing a receiver drier unit (S502) can be conducted after installing an accumulator unit (S504).

Also, like the first method, some processes illustrated in FIG. 5 are additional or optional processes. For instance, in some cases where the refrigerant system uses an electrical compressor with an accumulator built into the suction line, installing an accumulator unit (S504) is unnecessary. In such cases, a sensor, if needed, may be installed at the low pressure side of the refrigerant circuit.

Further, like the first method, the second method can have alternative, additional or optional processes, including those illustrated in FIGS. 4B and 4C and discussed with respect to the first method. For instance, in some embodiments, the second method further includes one or more of the following: predicting whether and when a failure, in which the refrigerant charge level is below a predetermined refrigerant level, is likely to occur based on one or more of the following: a trend of the determined refrigerant charge levels over time, exterior temperature, interior temperature and humidity (S416); predicting how long the refrigerant will last based on the sub-cooling level over time, the super-heating level over time, the refrigerant charge level, and/or other factors such as temperature and humidity inside and outside of the place where the refrigeration system is used (e.g., a vehicle) (S418). In some embodiments, the second method further includes one or more of the following: calculating a compression ratio of the compressor and comparing the compression ratio of the compressor with a specific compression ratio for a given condition (S420); determining that a blockage occurs in the refrigerant circuit if the calculated compression ratio of the compressor exceeds the specific compression ratio (S422); determining a location of the blockage based on the sub-cooling level and the super-heating level if a blockage has occurred (S424); and outputting a signal to request maintenance if it is determined that a blockage has occurred (S426).

The refrigeration systems and control methods of the present invention are advantageous in many ways. For instance, with the sensor(s) installed at the receiver drier and the accumulator, the present invention provides a smaller and more space efficient system, which requires less maintenance, and makes leak testing easier. Moreover, with an electronic valve connected to a refrigerant reservoir and integrated to the receiver drier, the accumulator or the refrigerant circuit, the refrigeration system of the present invention can continue functioning properly for some additional period of time, allowing an operator to schedule a maintenance appointment to avoid costly unscheduled maintenance or take other appropriate actions. Further, the controller helps predict whether a failure is likely to occur and can notify an operator, dealer or others if a failure occurs or is likely to occur.

The terminology used herein is for the purpose of describing particular implementations only and is not intended to be limiting of the claims. As used in the description of the implementations and the appended claims, the singular forms "a", "an" and "the" are intended to include the plural forms as well, unless the context clearly indicates otherwise. It will be understood that, although the terms "first," "second," etc. may be used herein to describe various elements, these elements should not be limited by these terms. These terms are only used to distinguish one element from another. For example, a first sensor could be termed a second sensor, and, similarly, a second sensor could be termed a first sensor, without changing the meaning of the description, so long as all occurrences of the "first sensor" are renamed consistently and all occurrences of the "second sensor" are renamed consistently.

## Claims

1. A refrigeration system (100), comprising:
a compressor (102) to compress a refrigerant;
a condenser (104) disposed downstream of the compressor (102) to condense the refrigerant;
an evaporator (106) disposed downstream of the condenser (104) to vaporize the refrigerant;
refrigerant lines (122-1 - 122-5) fluidly connecting the compressor (102), the condenser (104) and the evaporator (106) in series to form a refrigerant circuit for circulating the refrigerant;
wherein the system (100) further comprises: a receiver drier unit (108) disposed between the condenser (104) and the evaporator (106); and an accumulator unit (114) disposed between the evaporator (106) and the compressor (102),
wherein the receiver drier unit (108) comprises:
a receiver drier (110) configured to perform one or more of the following:
temporarily store the refrigerant; and
absorb moisture from the refrigerant;
a first sensor (112) installed at the receiver drier for measuring temperature and pressure of the refrigerant after it has passed through the condenser (104);
wherein the accumulator unit (114) comprises:
an accumulator (116) configured to restrict liquid refrigerant from entering the compressor (102);
a second sensor (118) installed at the accumulator for measuring temperature and pressure of the refrigerant after it has passed through the evaporator (106); and
an electronic valve (126) installed at the receiver drier or at the accumulator;
the refrigeration system (100) further comprising:
a controller(124) electrically connected to the electronic valve (126), the controller (124) being configured to:
determine a refrigerant sub-cooling level based on the temperature and pressure measured by the first sensor (112); and
determine a refrigerant super-heating level based on the temperature and pressure measured by the second sensor (118);
calculate a refrigerant charge level based at least in part on the determined sub-cooling level and the determined super-heating level;
determine whether the refrigerant charge level is below a predetermined refrigerant charge level; and
selectively control the electronic valve (126) to allow flow of the refrigerant from a refrigerant reservoir (128) fluidly connected to the electronic valve (126) to the refrigerant circuit if it is determined that the refrigerant charge level is below the predetermined refrigerant charge level, thereby raising the refrigerant charge level to above the predetermined refrigerant charge level.

2. The refrigeration system (100) of claim 1, wherein the first sensor (112) is a temperature and pressure transducer installed at any one of an inlet, an outlet and an inside of the receiver drier (110); and/or
wherein the second sensor (118) is a temperature and pressure transducer installed at any one of an inlet, an outlet and an inside of the accumulator (116).

3. The refrigeration system (100) of anyone of claims 1-2, wherein the sub-cooling level is determined using a look-up table in accordance with the temperature and pressure measured by the first sensor (112); and/or
wherein the super-heating level is determined using a look-up table in accordance with the temperature and pressure measured by the second sensor (118).

4. The refrigeration system (100) of any one of claims 1-3, wherein the controller (124) predicts whether and when a failure, in which the refrigerant charge level is below a predetermined refrigerant level, is likely to occur based on one or more of the following: a trend of the determined refrigerant charge levels over time, exterior temperature, interior temperature and humidity.

5. The refrigeration system (100) of any one of claims 1-3, wherein the controller (124) predicts how long the refrigerant will last based on one or more of the determined sub-cooling levels over time and/or the determined super-heating levels over time.

6. The refrigeration system (100) of any one of claims 1-3, wherein the controller (124) performs one or more of the following:
calculating a compression ratio of the compressor (102);
determining whether a blockage occurs in the refrigerant circuit based on the calculated compression ratio; and
determining a location of the blockage, if a blockage has occurred, based at least in part on the determined sub-cooling level and the determined super-heating level.

7. The refrigeration system (100) of any one of claims 1-3, wherein the controller (124) determines whether a blockage occurs in the refrigerant circuit based at least in part on the determined sub-cooling level or the determined super-heating level, and determines a location of the blockage if it is determined that a blockage has occurred.

8. The refrigeration system (100) of any one of claims 1-3, wherein the controller (124) is electrically connected to the compressor (102), counts clutch cycles of the compressor (102) and predicts clutch life of the compressor (102) based on one or more of the following: the clutch cycles, clutch temperature and current.

9. The refrigeration system (100) of any one of claims 1-3, wherein the controller (124) is electrically or wirelessly coupled to an electronic device (136) and outputs a warning signal if one or more of the following occur: the determined sub-cooling level is outside of a predetermined sub-cooling range, the determined super-heating level is outside of a predetermined super-heating range, the determined refrigerant charge level is below a predetermined refrigerant charge level, and a cooling efficiency of the refrigeration system (100) is below a predetermined cooling efficiency.

10. The refrigeration system (100) of any one of claims 1-3, further comprising:
a flow control valve (134) disposed upstream of the compressor (102) and configured to selectively restrict or permit flow of the refrigerant to the compressor (102).

11. A method for controlling a refrigeration system (100), wherein the refrigeration system (100) comprises a first sensor (112) for measuring temperature and pressure of a refrigerant after it has passed through a condenser (104), a second sensor (118) for measuring temperature and pressure of the refrigerant after it has passed through an evaporator (106), an electronic valve (126) fluidly connected to a refrigerant circuit of the refrigeration system (100) and a refrigerant reservoir (128), the method comprising:
(a) obtaining a refrigerant sub-cooling level based on the temperature and pressure of the refrigerant measured by the first sensor (112), and a refrigerant super-heating level based on the temperature and pressure of the refrigerant measured by the second sensor (118);
(b) calculating a refrigerant charge level based at least in part on the refrigerant sub-cooling level and the refrigerant super-heating level;
(c) determining whether the refrigerant charge level is below a predetermined refrigerant charge level; and
(d) selectively controlling the electronic valve (126), if it is determined that the refrigerant charge level is below the predetermined refrigerant charge level, to allow flow of the refrigerant from the refrigerant reservoir (128) to the refrigerant circuit of the refrigeration system (100), thereby raising the refrigerant charge level to above the predetermined refrigerant charge level.

12. The method of claim 11, further comprising:
predicting how long the refrigerant will last based at least in part on one or more of the determined sub-cooling levels over time and the determined super-heating levels over time.

13. The method of claim 11, further comprising:
calculating a compression ratio of a compressor (102) of the refrigeration system (100) and comparing the compression ratio of the compressor (102) with a specific compression ratio for a given condition;
determining that a blockage occurs in the refrigerant circuit if the calculated compression ratio of the compressor (102) exceeds the specific compression ratio; and
determining a location of the blockage based on the sub-cooling level and the super-heating level if a blockage has occurred.

14. The method of any one of claims 11-13, further comprising:
determining one or more of the following: whether the refrigerant sub-cooling level is outside of a predetermined refrigerant sub-cooling range, and whether the refrigerant super-heating level is outside of a predetermined refrigerant super-heating range; and
outputting a warning signal if one or more of the following occur: the determined sub-cooling level is outside of the predetermined sub-cooling range, the determined super-heating level is outside of the predetermined super-heating range, the determined refrigerant charge level is below the predetermined refrigerant charge level.

## Patentansprüche

1. Kühlsystem (100), Folgendes umfassend:
einen Kompressor (102), um ein Kältemittel zu verdichten;
einen Kondensator (104), der stromabwärts des Kompressors (102) angeordnet ist, um das Kältemittel zu kondensieren;
einen Verdampfer (106), der stromabwärts des Kondensators (104) angeordneten ist, um das Kältemittel zu verdampfen;
Kältemittelleitungen (122-1 - 122-5), die den Kompressor (102), den Kondensator (104) und den Verdampfer (106) in Reihe miteinander verbinden, um einen Kältemittelkreislauf für die Zirkulation des Kältemittels zu bilden;
wobei das System (100) ferner umfasst: eine Sammler-Trockner-Einheit (108), die zwischen dem Kondensator (104) und dem Verdampfer (106) angeordnet ist; und eine Sammler-Einheit (114), die zwischen dem Verdampfer (106) und dem Kompressor (102) angeordnet ist,
wobei die Sammler-Trockner-Einheit (108) umfasst:
einen Sammler-Trockner (110), der so konfiguriert ist, dass er eines oder mehreres von Folgendem ausführt:
vorübergehendes Speichern des Kältemittels; und
Absorbieren von Feuchtigkeit aus dem Kältemittel;
einen ersten Sensor (112), der am Sammler-Trockner installiert ist, um Temperatur und Druck des Kältemittels zu messen, nachdem es den Kondensator (104) passiert hat;
wobei die Sammler-Einheit (114) Folgendes umfasst:
einen Sammler (116), der so konfiguriert ist, dass er das Eintreten von flüssigem Kältemittel in den Kompressor (102) verhindert;
einen zweiten Sensor (118), der am Sammler installiert ist, um Temperatur und Druck des Kältemittels zu messen, nachdem es den Verdampfer (106) passiert hat; und
ein elektronisches Ventil (126), das am Sammler-Trockner oder am Sammler installiert ist;
wobei
das Kühlsystem (100) ferner umfasst:
einen Controller (124), der elektrisch mit dem elektronischen Ventil (126) verbunden ist,
wobei der Controller (124) konfiguriert ist zum:
Bestimmen eines Kältemittel-Unterkühlungsgrads auf der Grundlage der Temperatur und des Drucks, die vom ersten Sensor (112) gemessen werden; und
Bestimmen eines Kältemittel-Überhitzungsgrads auf der Grundlage der Temperatur und des Drucks, die vom zweiten Sensor (118) gemessen werden;
Berechnen eines Kältemittelfüllstands, der zumindest teilweise auf dem ermittelten Unterkühlungsgrad und dem ermittelten Überhitzungsgrad basiert;
Bestimmen, ob der Kältemittelfüllstand unter einem vorgegebenen Kältemittelfüllstand liegt; und
selektives Steuern des elektronischen Ventils (126), wenn festgestellt wird, dass der Kältemittelfüllstand unter dem vorbestimmten Kältemittelfüllstand liegt, um den Durchfluss des Kältemittels von einem Kältemittelbehälter (128), das mit dem elektronischen Ventil (126) in Fluidverbindung steht, zum Kältemittelkreislauf zu ermöglichen, wodurch der Kältemittelfüllstand auf einen Wert über dem vorbestimmten Kältemittelfüllstand erhöht wird.

2. Kühlsystem (100) nach Anspruch 1, wobei der erste Sensor (112) ein Temperatur- und Druckwandler ist, der an einem Einlass, einem Auslass oder im Inneren des Sammler-Trockners (110) installiert ist; und/oder
wobei der zweite Sensor (118) ein Temperatur- und Druckwandler ist, der an einem Einlass, einem Auslass oder an einem Inneren des Sammlers (116) installiert ist.

3. Kühlsystem (100) nach einem der Ansprüche 1 bis 2, wobei der Unterkühlungsgrad unter Verwendung einer Nachschlagetabelle in Übereinstimmung mit der Temperatur und dem Druck, die von dem ersten Sensor (112) gemessen werden, bestimmt wird; und/oder
wobei der Überhitzungsgrad unter Verwendung einer Nachschlagetabelle in Übereinstimmung mit der Temperatur und dem Druck, die von dem zweiten Sensor (118) gemessen werden, bestimmt wird.

4. Kühlsystem (100) nach einem der Ansprüche 1 bis 3, wobei der Controller (124) vorhersagt, ob und wann ein Ausfall, bei dem der Kältemittelfüllstand unter einem vorbestimmten Kältemittelfüllstand liegt, wahrscheinlich eintritt, auf der Grundlage von einem oder mehreren von: einem Trend der ermittelten Kältemittelfüllstände im Laufe der Zeit, der Außentemperatur, der Innentemperatur und der Luftfeuchtigkeit.

5. Kühlsystem (100) nach einem der Ansprüche 1 bis 3, wobei der Controller (124) vorhersagt, wie lange das Kältemittel reichen wird, auf der Grundlage von dem ermittelten Unterkühlungsgrad im Laufe der Zeit und/oder dem ermittelten Überhitzungsgrads im Laufe der Zeit.

6. Kühlsystem (100) nach einem der Ansprüche 1 bis 3, wobei der Controller (124) eines oder mehreres von Folgendem durchführt:
Berechnen des Kompressionsverhältnisses des Kompressors (102);
Bestimmen, ob eine Blockierung im Kältemittelkreislauf auftritt, basierend auf dem berechneten Kompressionsverhältnis; und
Bestimmen des Ortes der Blockierung, wenn eine Blockierung aufgetreten ist, zumindest teilweise auf der Grundlage des ermittelten Unterkühlungsgrades und des ermittelten Überhitzungsgrades.

7. Kühlsystem (100) nach einem der Ansprüche 1 bis 3, wobei der Controller (124) bestimmt, ob eine Blockierung im Kältemittelkreislauf auftritt, zumindest teilweise auf der Grundlage des ermittelten Unterkühlungsgrads oder des ermittelten Überhitzungsgrads, und einen Ort der Blockierung bestimmt, wenn festgestellt wird, dass eine Blockierung aufgetreten ist.

8. Kühlsystem (100) nach einem der Ansprüche 1 bis 3, wobei der Controller (124) elektrisch mit dem Kompressor (102) verbunden ist, Kupplungszyklen des Kompressors (102) zählt und die Lebensdauer der Kupplung des Kompressors (102) auf der Grundlage von Kupplungszyklen, Kupplungstemperatur und/oder Stromstärke vorhersagt.

9. Kühlsystem (100) nach einem der Ansprüche 1 bis 3, wobei der Controller (124) elektrisch oder drahtlos mit einer elektronischen Vorrichtung (136) gekoppelt ist und ein Warnsignal ausgibt, wenn eines oder mehreres von Folgendem eintritt: der ermittelte Unterkühlungsgrad liegt außerhalb eines vorbestimmten Unterkühlungsbereichs, der ermittelte Überhitzungsgrad liegt außerhalb eines vorbestimmten Überhitzungsbereichs, der ermittelte Kältemittelfüllgrad liegt unterhalb eines vorbestimmten Kältemittelfüllgrads, und eine Kühleffizienz des Kühlsystems (100) liegt unterhalb einer vorbestimmten Kühleffizienz.

10. Kühlsystem (100) nach einem der Ansprüche 1 bis 3, ferner umfassend:
ein Strömungsregelventil (134), das stromaufwärts des Kompressors (102) angeordnet und so konfiguriert ist, dass es die Strömung des Kältemittels zum Kompressor (102) selektiv beschränkt oder zulässt.

11. Verfahren zum Steuern eines Kühlsystems (100), wobei das Kühlsystem (100) einen ersten Sensor (112) zum Messen der Temperatur und des Drucks eines Kältemittels umfasst, nachdem dieses einen Kondensator (104) durchlaufen hat, einen zweiten Sensor (118) zum Messen der Temperatur und des Drucks des Kältemittels, nachdem dieses einen Verdampfer (106) durchlaufen hat, ein elektronisches Ventil (126), das mit einem Kühlkreislauf des Kühlsystems (100) in Fluidverbindung steht, und einen Kältemittelbehälter (128), wobei das Verfahren Folgendes umfasst:
(a) Bestimmen eines Kältemittel-Unterkühlungsgrads auf der Grundlage der Temperatur und des Drucks des Kältemittels, die von dem ersten Sensor (112) gemessen werden, und eines Kältemittel-Überhitzungsgrads auf der Grundlage der Temperatur und des Drucks des Kältemittels, die von dem zweiten Sensor (118) gemessen werden;
(b) Berechnen eines Kältemittelfüllstands, der zumindest teilweise auf dem Kältemittelunterkühlungsgrad und dem Kältemittelüberhitzungsgrad basiert;
(c) Bestimmen, ob der Kältemittelfüllstand unter einem vorgegebenen Kältemittelfüllstand liegt; und
(d) selektives Steuern des elektronischen Ventils (126), wenn festgestellt wird, dass der Kältemittelfüllstand unter dem vorbestimmten Kältemittelfüllstand liegt, um den Durchfluss des Kältemittels aus dem Kältemittelbehälter (128) zum Kältemittelkreislauf des Kühlsystems (100) zu ermöglichen, wodurch der Kältemittelfüllstand über den vorbestimmten Kältemittelfüllstand angehoben wird.

12. Verfahren nach Anspruch 11, ferner umfassend:
Vorhersagen, wie lange das Kältemittel halten wird, zumindest teilweise basierend auf einem oder mehreren der ermittelten Unterkühlungsgrade im Laufe der Zeit und den ermittelten Überhitzungsgraden im Laufe der Zeit.

13. Verfahren nach Anspruch 11, ferner umfassend:
Berechnen eines Verdichtungsverhältnisses eines Kompressors (102) des Kühlsystems (100) und Vergleichen des Verdichtungsverhältnisses des Kompressors (102) mit einem spezifischen Verdichtungsverhältnis für eine gegebene Bedingung;
Bestimmen, dass eine Blockierung im Kältemittelkreislauf vorliegt, wenn das berechnete Verdichtungsverhältnis des Kompressors (102) das spezifische Verdichtungsverhältnis überschreitet; und
Bestimmen eines Ortes der Blockierung, wenn eine Blockierung aufgetreten ist, auf der Grundlage des Unterkühlungsgrads und des Überhitzungsgrads.

14. Verfahren nach einem der Ansprüche 11 bis 13, ferner umfassend:
Bestimmen, ob der Kältemittel-Unterkühlungsgrad außerhalb eines vorbestimmten Kältemittel-Unterkühlungsbereichs liegt, und/oder ob der Kältemittel-Überhitzungsgrad außerhalb eines vorbestimmten Kältemittel-Überhitzungsbereichs liegt; und
Ausgeben eines Warnsignals, wenn eines oder mehreres von Folgendem eintritt: der ermittelte Unterkühlungsgrad liegt außerhalb des vorbestimmten Unterkühlungsbereichs, der ermittelte Überhitzungsgrad liegt außerhalb des vorbestimmten Überhitzungsbereichs, der ermittelte Kältemittelfüllgrad liegt unter dem vorbestimmten Kältemittelfüllgrad.

## Revendications

1. Système de réfrigération (100), comprenant :
un compresseur (102) pour comprimer un fluide frigorigène ;
un condenseur (104) disposé en aval du compresseur (102) pour condenser le fluide frigorigène ;
un évaporateur (106) disposé en aval du condenseur (104) pour vaporiser le fluide frigorigène ;
des conduites de fluide frigorigène (122-1 - 122-5) raccordant de manière fluidique le compresseur (102), le condenseur (104) et l'évaporateur (106) en série pour former un circuit de fluide frigorigène pour la circulation du fluide frigorigène ;
dans lequel le système (100) comprend en outre : une unité de séchage de récepteur (108) disposée entre le condenseur (104) et l'évaporateur (106) ; et une unité d'accumulateur (114) disposée entre l'évaporateur (106) et le compresseur (102),
dans lequel l'unité de séchage de récepteur (108) comprend :
un séchoir de récepteur (110) configuré pour effectuer un ou plusieurs des éléments suivants :
le stockage temporaire du fluide frigorigène ; et
l'absorption de l'humidité provenant du fluide frigorigène ;
un premier capteur (112) installé au niveau du séchoir de récepteur pour la mesure de la température et de la pression du fluide frigorigène après qu'il a traversé le condenseur (104) ;
dans lequel l'unité d'accumulateur (114) comprend :
un accumulateur (116) configuré pour limiter l'entrée de fluide frigorigène liquide dans le compresseur (102) ;
un deuxième capteur (118) installé au niveau de l'accumulateur pour la mesure de la température et de la pression du fluide frigorigène après qu'il a traversé l'évaporateur (106) ; et
une vanne électronique (126) installée au niveau du séchoir de récepteur ou au niveau de l'accumulateur ;
le système de réfrigération (100) comprenant en outre :
un dispositif de commande (124) raccordé électriquement à la vanne électronique (126), le dispositif de commande (124) étant configuré pour :
déterminer un niveau de sous-refroidissement de fluide frigorigène sur la base de la température et de la pression mesurées par le premier capteur (112) ; et
déterminer un niveau de surchauffe de fluide frigorigène sur la base de la température et de la pression mesurées par le deuxième capteur (118) ;
calculer un niveau de charge de fluide frigorigène sur la base au moins en partie du niveau de sous-refroidissement déterminé et du niveau de surchauffe déterminé ;
déterminer si le niveau de charge de fluide frigorigène est inférieur ou non à un niveau de charge de fluide frigorigène prédéterminé ; et
commander de manière sélective la vanne électronique (126) pour permettre un écoulement du fluide frigorigène d'un réservoir de fluide frigorigène (128) raccordé de manière fluidique à la vanne électronique (126) au circuit de fluide frigorigène s'il est déterminé que le niveau de charge de fluide frigorigène est inférieur au niveau de charge de fluide frigorigène prédéterminé, augmentant ce faisant le niveau de charge de fluide frigorigène au-dessus du niveau de charge de fluide frigorigène prédéterminé.

2. Système de réfrigération (100) selon la revendication 1, dans lequel le premier capteur (112) est un transducteur de température et de pression installé au niveau de l'un quelconque parmi une entrée, une sortie et un intérieur du séchoir de récepteur (110) ; et/ou dans lequel le deuxième capteur (118) est un transducteur de température et de pression installé au niveau de l'un quelconque parmi une entrée, une sortie et un intérieur de l'accumulateur (116).

3. Système de réfrigération (100) selon l'une quelconque des revendications 1-2, dans lequel le niveau de sous-refroidissement est déterminé à l'aide d'une table de consultation en fonction de la température et de la pression mesurées par le premier capteur (112) ; et/ou dans lequel le niveau de surchauffe est déterminé à l'aide d'une table de consultation en fonction de la température et de la pression mesurées par le deuxième capteur (118).

4. Système de réfrigération (100) selon l'une quelconque des revendications 1-3, dans lequel le dispositif de commande (124) prédit si et quand une défaillance, dans laquelle le niveau de charge de fluide frigorigène est inférieur à un niveau de fluide frigorigène prédéterminé, est susceptible de se produire sur la base d'un ou plusieurs des éléments suivants : une tendance des niveaux de charge de fluide frigorigène déterminés au cours du temps, la température extérieure, la température intérieure et l'humidité.

5. Système de réfrigération (100) selon l'une quelconque des revendications 1-3, dans lequel le dispositif de commande (124) prédit combien de temps le fluide frigorigène va durer sur la base d'un ou plusieurs des niveaux de sous-refroidissement déterminés au cours du temps et/ou des niveaux de surchauffe déterminés au cours du temps.

6. Système de réfrigération (100) selon l'une quelconque des revendications 1-3, dans lequel le dispositif de commande (124) effectue un ou plusieurs des éléments suivants :
le calcul d'un taux de compression du compresseur (102) ;
la détermination du fait si un blocage se produit ou non dans le circuit de fluide frigorigène sur la base du taux de compression calculé ; et
la détermination d'un emplacement du blocage, si un blocage s'est produit, sur la base au moins en partie du niveau de sous-refroidissement déterminé et du niveau de surchauffe déterminé.

7. Système de réfrigération (100) selon l'une quelconque des revendications 1-3, dans lequel le dispositif de commande (124) détermine si un blocage se produit ou non dans le circuit de fluide frigorigène sur la base au moins en partie du niveau de sous-refroidissement déterminé ou du niveau de surchauffe déterminé, et détermine un emplacement du blocage s'il est déterminé qu'un blocage s'est produit.

8. Système de réfrigération (100) selon l'une quelconque des revendications 1-3, dans lequel le dispositif de commande (124) est raccordé électriquement au compresseur (102), compte les cycles d'embrayage du compresseur (102) et prédit la durée de vie de l'embrayage du compresseur (102) sur la base d'un ou plusieurs des éléments suivants : les cycles d'embrayage, la température et le courant d'embrayage.

9. Système de réfrigération (100) selon l'une quelconque des revendications 1-3, dans lequel le dispositif de commande (124) est couplé électriquement ou sans fil à un dispositif électronique (136) et émet un signal d'avertissement si un ou plusieurs des éléments suivants se produit : le niveau de sous-refroidissement déterminé est en dehors d'une plage de sous-refroidissement prédéterminée, le niveau de surchauffe déterminé est en dehors d'une plage de surchauffe prédéterminée, le niveau de charge de fluide frigorigène déterminé est inférieur à un niveau de charge de fluide frigorigène prédéterminé et une efficacité de refroidissement du système de réfrigération (100) est inférieure à une efficacité de refroidissement prédéterminée.

10. Système de réfrigération (100) selon l'une quelconque des revendications 1-3, comprenant en outre :
une vanne de régulation de débit (134) disposée en amont du compresseur (102) et configurée pour, de manière sélective, limiter ou permettre un écoulement du fluide frigorigène au compresseur (102).

11. Procédé de commande d'un système de réfrigération (100), dans lequel le système de réfrigération (100) comprend un premier capteur (112) pour la mesure de la température et de la pression d'un fluide frigorigène après qu'il a traversé un condenseur (104), un deuxième capteur (118) pour la mesure de la température et de la pression du fluide frigorigène après qu'il a traversé un évaporateur (106), une vanne électronique (126) raccordée de manière fluidique à un circuit de fluide frigorigène du système de réfrigération (100) et un réservoir de fluide frigorigène (128), le procédé comprenant :
(a) l'obtention d'un niveau de sous-refroidissement de fluide frigorigène sur la base de la température et de la pression du fluide frigorigène mesurées par le premier capteur (112), et d'un niveau de surchauffe de fluide frigorigène sur la base de la température et de la pression du fluide frigorigène mesurées par le deuxième capteur (118) ;
(b) le calcul d'un niveau de charge de fluide frigorigène sur la base au moins en partie du niveau de sous-refroidissement de fluide frigorigène et du niveau de surchauffe de fluide frigorigène ;
(c) la détermination du fait si le niveau de charge de fluide frigorigène est inférieur ou non à un niveau de charge de fluide frigorigène prédéterminé ; et
(d) la commande sélective de la vanne électronique (126), s'il est déterminé que le niveau de charge de fluide frigorigène est inférieur au niveau de charge de fluide frigorigène prédéterminé, pour permettre un écoulement du fluide frigorigène du réservoir de fluide frigorigène (128) au circuit de fluide frigorigène du système de réfrigération (100), augmentant ce faisant le niveau de charge de fluide frigorigène au-dessus du niveau de charge de fluide frigorigène prédéterminé.

12. Procédé selon la revendication 11, comprenant en outre :
la prédiction de la durée pendant laquelle le fluide frigorigène va durer sur la base au moins en partie d'un ou plusieurs parmi les niveaux de sous-refroidissement déterminés au cours du temps et des niveaux de surchauffe déterminés au cours du temps.

13. Procédé selon la revendication 11, comprenant en outre :
le calcul d'un taux de compression d'un compresseur (102) du système de réfrigération (100) et la comparaison du taux de compression du compresseur (102) avec un taux de compression spécifique pour une condition donnée ;
la détermination du fait qu'un blocage se produit dans le circuit de fluide frigorigène si le taux de compression calculé du compresseur (102) dépasse le taux de compression spécifique ; et
la détermination d'un emplacement du blocage sur la base du niveau de sous-refroidissement et du niveau de surchauffe si un blocage s'est produit.

14. Procédé selon l'une quelconque des revendications 11-13, comprenant en outre :
la détermination d'un ou plusieurs des éléments suivants : si le niveau de sous-refroidissement de fluide frigorigène est ou non en dehors d'une plage de sous-refroidissement de fluide frigorigène prédéterminée et si le niveau de surchauffe de fluide frigorigène est ou non en dehors d'une plage de surchauffe de fluide frigorigène prédéterminée ; et
l'émission d'un signal d'avertissement si un ou plusieurs des éléments suivants se produit : le niveau de sous-refroidissement déterminé est en dehors de la plage de sous-refroidissement prédéterminée, le niveau de surchauffe déterminé est en dehors de la plage de surchauffe prédéterminée, le niveau de charge de fluide frigorigène déterminé est inférieur au niveau de charge de fluide frigorigène prédéterminé.
